# EUROPÄISCHE PATENTSCHRIFT

(11) **EP 1 046 481 B1**
(45) Veröffentlichungstag und Bekanntmachung des Hinweises auf die Patenterteilung: **24.09.2003**
(21) Anmeldenummer: 99107767.8
(22) Anmeldetag: 19.04.1999
(51) Int. Cl.: B27M 3/18, B23Q 7/14

(54) **Möbelkorpus-Montagelinie**
Furniture assembly line
Ligne de montage pour corps de meuble

(43) Veröffentlichungstag der Anmeldung: 25.10.2000
(60) Teilanmeldung: 03000028.5
(73) Patentinhaber: LIGMATECH MASCHINENBAU GmbH, D-09638 Lichtenberg (DE)
(72) Erfinder: Eckert, Peter, Dipl.-Ing., 09600 Zug (DE); Kaden, Dietmar, 09619 Mulda (DE); Tönnigs, Bodo, Dipl.-Ing., 09638 Lichtenberg (DE)
(74) Vertreter: HOFFMANN - EITLE

(56) Entgegenhaltungen:
- DE-A- 2 647 589
- DE-A- 19 654 292
- DE-A- 19 744 285
- DE-C- 4 301 273

## Beschreibung

### Technisches Gebiet

Die Erfindung betrifft eine Montagelinie zum Zusammenfügen und Verpressen von einzelnen Korpusteilen zu einem Möbelkorpus, wie beispielsweise ein Hoch-, Ober- oder Unterschrank.

### Stand der Technik

Die Möbelindustrie fordert zunehmend eine automatisierte Herstellung von Möbelkorpussen. Hierzu hat man bereits Montagelinien entwickelt, die eine mehr oder weniger automatisierte Beschickung einer Korpuspresse ermöglichen. In einer Korpuspresse werden die bereits vorgefertigten, insbesondere vorgebohrten und gefrästen Seiten und Böden eines Korpus miteinander verpresst. Das Beschicken der Presse mit den Korpusseiten oder -böden, je nachdem, ob der Korpus liegend oder stehend transportiert oder gepresst wird, erfolgt üblicherweise über eine Zuführeinrichtung in Form eines Transportbandes oder eines Riemenförderers. Da fertigungstechnisch die auf dem der Presse vorgeschalteten Riemenförderer laufenden Böden bzw. Seiten der Korpusse immer mit der gleichen Seitenlage einlaufen, muss normalerweise die obere Seite des Korpus um 180° gewendet werden, bevor sie in der Korpuspresse mit den anderen Korpusteilen verpresst werden kann. Die unteren Korpusböden werden üblicherweise mittels eines weiteren Riemen- oder Bandförderers in die Korpuspresse eintransportiert und dann hierin ausgerichtet. Sobald die gewendete und ausgerichtete obere Seite und die ausgerichtete untere Seite in der Korpuspresse eingefahren sind, werden die Seiten oder Böden - je nach dem, ob der Korpus liegend oder stehend in die Presse einläuft - per Hand in die Korpuspresse eingeführt, woraufhin der Pressvorgang erfolgt. Das Austransportieren der fertig gepressten Korpusse in weitere Bearbeitungs- bzw. Montagestationen erfolgt wiederum über einen Riemen- oder Bandförderer, der von innerhalb der Korpuspresse bis zu einer weiteren Übergabestation reicht.

So ist beispielsweise in der DE 43 01 273 C1 eine Korpuspresse mit vorgeschalteter Wendevorrichtung offenbart, wobei die Wendevorrichtung einen Schlitten umfasst, der in den oberen Pressentisch einschiebbar ist. Damit ist die obere Korpusseite von einer Zuführeinrichtung abnehmbar und nach Durchführung der Wendung in die Korpuspresse einführbar. Während des Wende- und Einbringvorgangs wird über das Förderband eine untere Korpusseite in die Korpuspresse transportiert. Zum Ausbringen des gepressten Korpus sind Riemenantriebe vorhanden. Zum Erhöhen der Taktzeiten dieser bekannten Montagelinie hat man auf beiden Schlittenseiten Haltemittel zum wahlweisen Halten eines Werkstücks auf einer der beiden Seiten des Schlittens angeordnet und der Schlitten ist wahlweise beidseitig in den oberen Pressentisch einfahrbar. Nachteilig ist jedoch bei dieser bekannten Ausführungsform, dass aufgrund der Riemenförderer das Einbringen der Werkstücke und das Ausbringen des fertigen Korpus geschwindigkeitsmäßig begrenzt ist. So dauert insbesondere das Ausbringen der Korpusse unverhältnismäßig lange.

Aus der DE 25 45 444 C3 ist eine Vorrichtung zum Zusammenbauen von Möbelkorpussen bekannt, die vor einer Korpuspresse eine aus einer Förderbahn und aus einzelnen Paletten bestehende Zuführeinrichtung und eine zwischen dieser und der Korpuspresse verfahrbare Übergabeeinrichtung aufweist. Dieser Vorrichtung liegt die Aufgabe zugrunde, einen Möbelkorpusrahmen und eine Rückwand unter Vermeidung eines Ansatzes eines Klebemittels und mit möglichst geringem personellem Aufwand zusammenzubauen.

In der DE 39 16 013 C2 ist schließlich eine Montageanlage für Möbelkorpusse offenbart, bei der eine erste Maschine zum Zusammenbauen des Möbelkorpusses aus Möbelteilen und eine zweite Maschine zum Halten des Möbelkörpusses und zum Anbringen weiterer Möbelteile an dem Möbelkorpus vorhanden ist. Ferner ist ein Wagen zum Transportieren des Möbelkorpus von der ersten Maschine zur zweiten Maschine vorgesehen. Der Austrag des Möbelkorpus aus der ersten Maschine erfolgt mittels eines Riemenförderers. Auch der Austrag aus der zweiten Maschine erfolgt mittels eines separaten Bandförderers.

### Darstellung der Erfindung

Das der Erfindung zugrunde liegende technische Problem besteht darin, eine Montagelinie zum Zusammenfügen und Verpressen von einzelnen Korpusteilen zu einem Möbelkorpus bereitzustellen, die gegenüber dem Stand der Technik höhere Taktraten ermöglicht, insbesondere das Ein- und Ausbringen der Korpusteile bzw. des gepressten Korpus mit höherer Geschwindigkeit zulässt.

Dieses technische Problem wird durch eine Montagelinie gelöst, die eine Zuführeinrichtung zum Zuführen bestimmter Korpusteile, eine Wendevorrichtung zum Wenden von bestimmten von Zuführvorrichtungen zugeführten Korpusteilen und eine der Wendevorrichtung nachgeordnete Korpuspresse zum Verpressen von Korpussen wie auch zumindest eine der Korpuspresse nachgeordnete Korpus-Montagestation umfasst. Ein erster Transporttisch ist zwischen der Wendevorrichtung und der Korpuspresse verfahrbar. An diesem ersten Transporttisch ist eine Befestigungseinrichtung vorhanden, mit der in der Wendevorrichtung übernommene und in die Korpuspresse zu transportierende Korpusteile gehalten werden können. Ein zweiter Transporttisch ist zwischen der Korpuspresse und der nachgeordneten Korpus-Montagestation verfahrbar. Auch dieser Transporttisch umfasst eine Halteeinrichtung zum lösbaren Halten von in der Korpuspresse übernommenen und in die nachgeordnete Korpus-Montagestation zu transportierenden Korpussen.

Der Erfindung liegt der Gedanke zugrunde, zumindest zwei verfahrbare Transporttische vorzusehen, auf denen die einzelnen Korpusteile bzw. der fertig gepresste Korpus gehalten in die Presse bzw. aus dieser heraus verfahren werden kann. Durch das Vorsehen von Transporttischen mit Halteeinrichtungen können erstmals höhere Geschwindigkeiten beim Ein- und Austransport gefahren werden. Darüber hinaus können durch die erfindungsgemäße Lösung auch gleichzeitig mehrere Verfahrensschritte gleichzeitig in der Montagelinie durchgeführt werden. So ist es beispielsweise möglich, während des Eintransportes einer unteren Korpusseite in die Korpuspresse einen fertigen Korpus mit größerer Geschwindigkeit als bisher auszutransportieren. Durch das Festhalten der Korpusse auf dem zweiten Transportwagen bzw. der Korpusseiten auf dem ersten Transportwagen können schnellere Geschwindigkeiten und höhere Anfahrgeschwindigkeiten bzw. größere Beschleunigungen gefahren werden, wodurch die Taktzeiten verringert werden. Darüber hinaus bleibt auf den Tischen die Position der einzelnen Teile bzw. der fertigen Korpusse beibehalten, so dass für die jeweils nachfolgende Station keine erneute Ausrichtung notwendig ist. Schließlich ist noch hervorzuheben, dass insbesondere bei empfindlichen Oberflächen der auf den Tischen aufliegenden Korpusseiten erstmals die Beschädigungsgefahr äußerst gering ist, da kein Schlupf zwischen Transporttisch und den aufliegenden Korpusteilen erfolgt.

Hierzu ist noch anzumerken, dass unter einer Korpus-Montagestation im Sinne der vorliegenden Erfindung auch eine einfache Korpus-Entnahmestation zu subsumieren ist. In einer Korpus-Montagestation sind somit verschiedenste Arbeiten manuell oder automatisiert durchzuführen. Die Arbeiten umfassen beispielsweise Anbringen von Beschlägen, Bohren weiterer Löcher, Einhängen von Türen, Einlegen von Zwischenböden, Aufstellen der Korpusse, Verpacken der fertigen Korpusse und dergleichen. Für derartige Arbeiten sind optimalerweise mehrere Korpus-Montagestationen der Korpuspresse nachgeordnet. Dabei sind jeweils zwei zueinander benachbarte Stationen durch einen verfahrbaren Transporttisch mit daran angeordneter Halteeinrichtung für einen von einer Station zur nächsten zu transportierenden Korpus gekoppelt. Wiederum hat man hier beim Transport der einzelnen Korpusse von einer Station zur nächsten die gleichen Vorteile erzielt, wie mit den Transportwagen, die zwischen der Wendevorrichtung und der Korpuspresse bzw. der Korpuspresse und einer nachgeschalteten Korpus-Montagestation gegeben sind.

Eine technisch wenig aufwendige und steuerungstechnisch einfache Lösung besteht darin, zumindest die zwei Transporttische, die zwischen der Wendevorrichtung und der Korpuspresse bzw. der Korpuspresse und einer der Korpuspressen nachgeordneten Korpus-Montagestation verfahrbar sind, starr miteinander zu koppeln. Damit ist für die zwei Transporttische nur ein einziger Antrieb notwendig und das Ein- und Ausbringen verschiedener Teile in die und aus der Korpuspresse ist zwangsläufig kollisionsfrei. Darüber hinaus ist die Steuerung der derart miteinander gekoppelten Transporttische einfach zu programmieren.

Für den Fall, dass mehr als zwei Transporttische in der Montagelinie vorhanden sind, ist es aus den zuvor genannten Gründen vorteilhaft, dass alle Tische starr miteinander gekoppelt sind.

Unter Umständen ist es aber auch alternativ zu der voranstehenden Lösung möglich, die zumindest zwei Transporttische, die zwischen der Wendevorrichtung und der Korpuspresse bzw. der Korpuspresse und einer der Korpuspressen nachgeordneten Korpus-Montagestation verfahrbar sind, unabhängig voneinander verfahrbar vorzusehen. Dementsprechend könnten unterschiedliche Tranportgeschwindigkeiten für das Ein- und Ausbringen von Teilen in die bzw. aus der Korpuspresse gewählt werden. Damit ist es auch möglich, den Ein- und Austransport zu unterschiedlichen Zeiten vorzunehmen. Durch die unterschiedlichen Zeiten und Geschwindigkeiten können deshalb auch unterschiedliche Wegstrecken zurückgelegt werden. Nachdem die aus der Korpuspresse herauszutransportierenden Korpusse aufgrund der möglicherweise noch nicht vorhandenen Rückwand relativ instabil sind, könnte es hier vorteilhaft sein, eine geringere Geschwindigkeit zu wählen als beim Einbringen der unteren Korpusseite. Außerdem könnte dann eine der jeweiligen Station (Korpuspresse bzw. Wendevorrichtung) individuell angepasste Steuerung der Tische und der zugehörigen Einrichtungen erfolgen. Beispielsweise wäre es möglich, das Ausfahren des zweiten Transporttisches bereits auszulösen, wenn noch eine untere Korpusseite auf den ersten Transporttisch aufzubringen ist.

Dementsprechend kann es unter Umständen auch zweckmäßig sein, dass alle Transporttische, soweit mehr als zwei Transporttische vorhanden sind, unabhängig voneinander verfahrbar sind.

Darüber hinaus kann es zweckmäßig sein, nur die zwei Transporttische, die in bzw. aus der Korpuspresse hinein- bzw. herausfahrbar sind, mechanisch zu koppeln, die weiteren, möglicherweise vorhandenen Transporttische individuell verfahrbar zu gestalten. Entsprechend könnte es unter Umständen zweckmäßig sein, jeweils Zweiergruppen von Transporttischen zu bilden, die mechanisch gekoppelt sind, jedoch gruppenweise individuell verfahrbar sind.

Optimalerweise weisen die Transporttische als Halteeinrichtung mehrere Sauger auf, die ein Ansaugen der ein- bzw. auszubringenden Werkstücke ermöglichen. Unter Umständen ist es aber auch zweckmäßig, mechanische Greifeinrichtungen vorzusehen. Bei der Ausgestaltung mit mehreren Saugern sind dabei zweckmäßig für die verschiedenen Transporttische nur eine oder gruppenweise mehrere Unterdruckquellen bereitzustellen, die über beispielsweise flexible Leitungen mit den einzelnen Transporttischen bzw. den darin befindlichen Saugern verbindbar sind.

Um das Ein- bzw. Ausfahren der Transporttische in bzw. aus der Korpuspresse zu ermöglichen, weist die Korpuspresse einen sich aus mehreren voneinander beabstandeten Pressentischabschnitten zusammensetzenden unteren Pressentisch auf.

Für eine einwandfreie Übergabe der Werkstücke auf den Transporttischen sind diese oder die daran angeordneten Halteeinrichtungen gegenüber dem Pressentisch absenkbar bzw. in der Höhe verfahrbar.

Die Korpuspresse weist zweckmäßigerweise einen in die Wendevorrichtung verfahrbaren Schlitten auf, mit dem die gewendete Korpusseite aus der Wendevorrichtung entnehmbar und in die Presse überführbar ist. Prinzipiell ist es aber auch möglich, die Wendevorrichtung mit einem solchen Schlitten zu versehen, wie es insbesondere in der DE 43 01 273 C1 offenbart ist. Bei dieser Lösung ist es insbesondere zweckmäßig, die Wendevorrichtung mit einem in der Höhe verfahrbaren Wendeschlitten auszustatten, mit dem von der Zuführvorrichtung eine während des Pressvorgangs obenliegende Seite eines herzustellenden Korpus aufnehmbar ist, und der um eine horizontale Drehachse drehbar ist. In der angehobenen Stellung ist dieser Wendeschlitten zudem in die nachgeordnete Korpuspresse einfahrbar.

Optimalerweise sind ein oder mehrere Ausrichteinrichtungen in der Wendevorrichtung und/oder an der Zuführvorrichtung vorgesehen, so dass mittels der Ausrichtvorrichtungen, die durch die Zuführeinrichtung zugeführten Korpusteile in gewünschter Weise auszurichten sind. Damit können die durch die Einzugsvorrichtung der Korpuspresse bzw. durch den ersten Transportwagen übernommenen Korpusteile bereits ausgerichtet in die Korpuspresse eingefahren werden, so dass in der Korpuspresse keine weitere Ausrichtung notwendig ist. Damit ist der Freiraum in der Korpuspresse größer, so dass beispielsweise zum Beschicken der Böden oder der Seiten der Korpusse in die Korpuspresse auch ein Roboter einsetzbar ist. Außerdem können zusätzliche Vorrichtungen, wie beispielsweise Haltevorrichtugen, angeordnet werden, um weitere Korpuselemente (z.B. Zwischenböden, Beschläge, Traversen, Sockelleisten) zu montieren.

### Kurze Beschreibung der Zeichnungen

Im Folgenden ist zur weiteren Erläuterung und zum besseren Verständnis ein Ausführungsbeispiel der Erfindung unter Bezugnahme auf die beigefügten Zeichnungen näher beschrieben und erläutert. Es zeigt:
- Fig. 1: eine schematische Seitenansicht einer erfindungsgemäßen Montagelinie, in der sich der erste und zweite Transporttisch in der Wendevorrichtung bzw. der Korpuspresse befinden,
- Fig. 2: eine der Fig. 1 gleichende Seitenansicht der erfindungsgemäßen Montagelinie, in der sich aber der erste und zweite Transporttisch in der Korpuspresse bzw. der der Korpuspresse nachgeordneten Korpus-Montagestation befinden,
- Fig. 3: eine Seitenansicht der Korpuspresse mit festem unteren Pressentisch mit darin eingefahrenem Transporttisch,
- Fig. 4: eine schematische Seitenansicht der Wendevorrichtung mit hier hereinreichendem Riemenförderer und eingefahrenem Transporttisch,
- Fig. 5: eine Detailansicht eines Teils eines Transporttisches mit daran angebrachtem Schwenkarm, der sich in einer abgeklappten Position befindet,
- Fig. 6: eine der Fig. 5 entsprechenden Seitenansicht mit hochgeklapptem Schwenkarm und
- Fig. 7: ein schematischer Ablaufplan der Funktionsweise einer erfindungsgemäßen Montagelinie.

### Beschreibung eines bevorzugten Ausführungsbeispiels der Erfindung

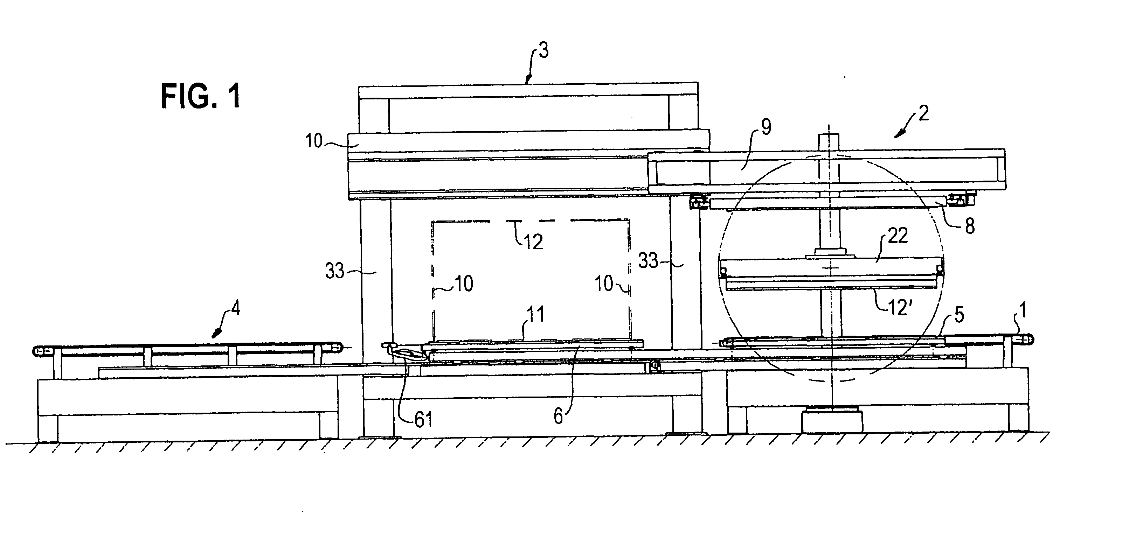

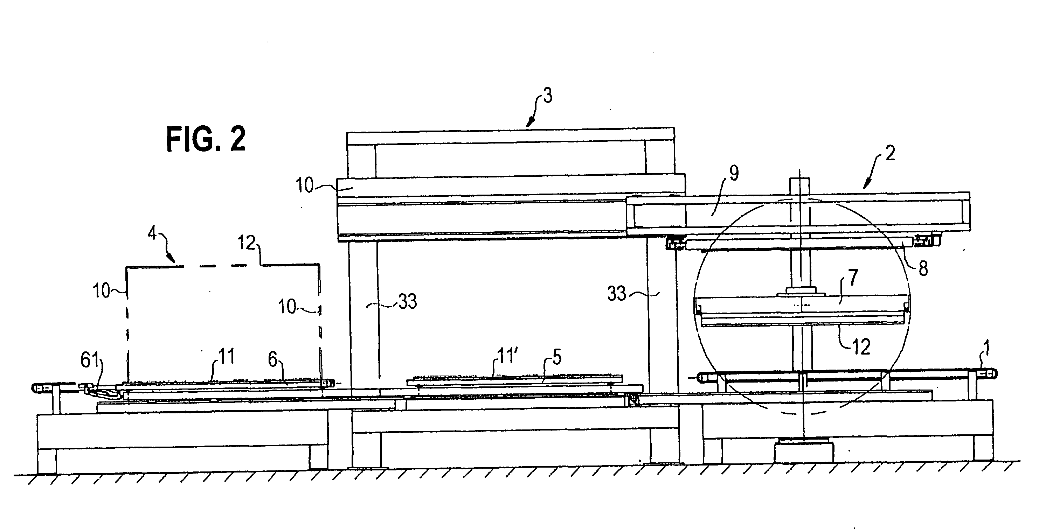

Eine erfindungsgemäße Montagelinie, wie sie beispielhaft in den Fig. 1 und 2 dargestellt ist, umfasst hier grundsätzlich eine Zuführvorrichtung 1 in Gestalt eines Riemenförderers, eine Wendevorrichtung 2, eine Korpuspresse 3 und eine der Korpuspresse 3 nachgeordnete Korpus-Montagestation 4. Ein erster Transporttisch ist von der Wendevorrichtung 2 in die Korpuspresse 3 verfahrbar. Ein zweiter Transporttisch 6 ist von der Korpuspresse 3 in die nachgeordnete Korpus-Montagestation 4 verfahrbar.

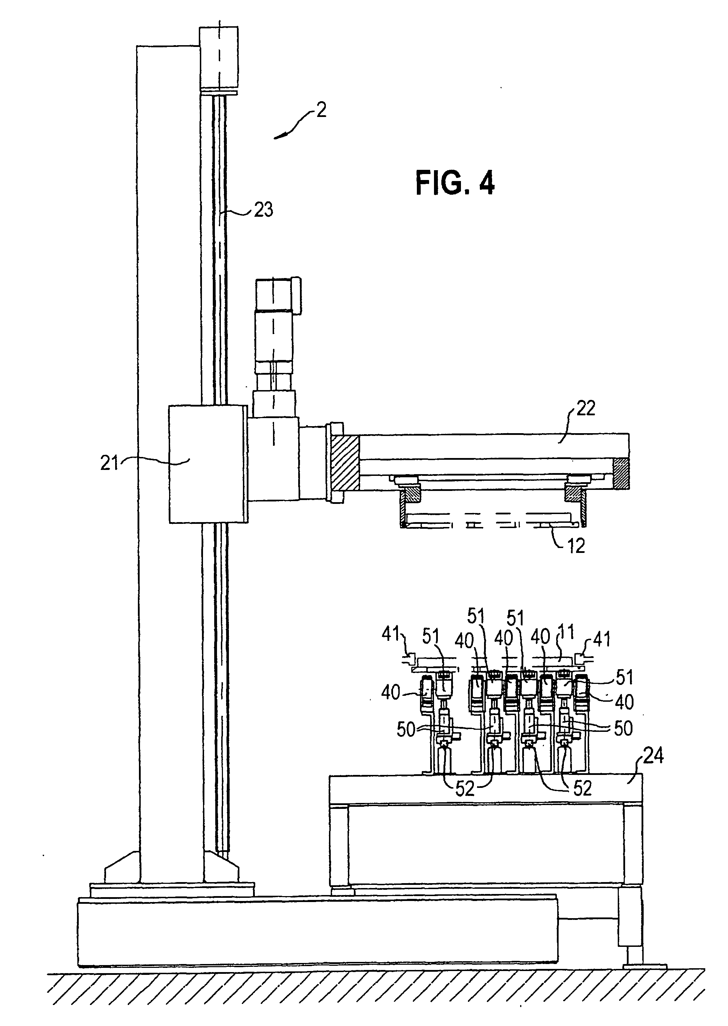

Der Riemenförderer 1 umfasst, wie es insbesondere aus der Fig. 4 ersichtlich ist, mehrere parallel nebeneinanderliegende Endlosriemenbahnen 40 und ein oder mehrere Ausrichtvorrichtungen für die untere Korpusseite. Der weitere Aufbau der Wendevorrichtung ist insbesondere in der Fig. 4 besser ersichtlich. Die Riemenbahnen 40 sind über Halterungen auf einem Gestell 24 befestigt. Über diesen Riemenbahnen 40 befindet sich ein vertikal an einer Spindel 23 verfahrbarer Wendeschlitten 22, der über eine Führung 21 in der Spindel 23 auf- und abwärts bewegt werden kann. Der Wendeschlitten 22 ist um eine horizontale Drehachse drehbar und weist an beiden Seiten, eine Greif- und Ausrichteinrichtung für eine obere Korpusseite 12 auf. Eine Einzugsvorrichtung 8 ist zudem, wie es aus der Darstellung gemäß der Fig. 1 ersichtlich ist, in Schienen 9 von der Korpuspresse 3 in die Wendevorrichtung 2 verfahrbar , um die gewendete Korpusseite 12 aufzunehmen und in die Korpuspresse einzufahren.

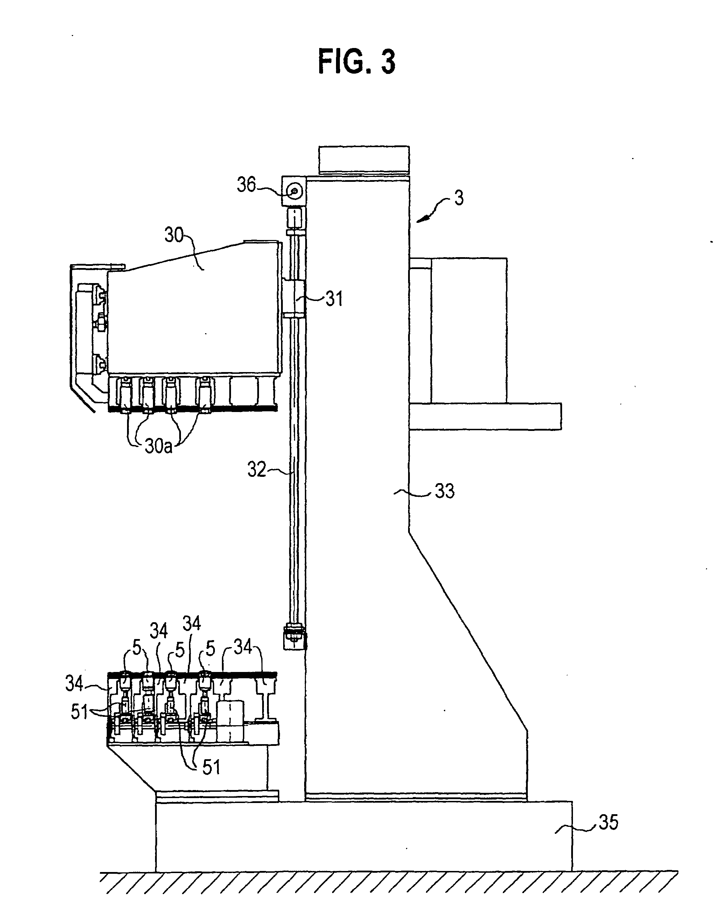

In der Korpuspresse ist das ausgerichtete Werkstück durch Saugeinrichtungen 30a an der Einzugsvorrichtung 8 haltbar. Der grundsätzliche Aufbau der Korpuspresse ist aus der Fig. 3 ersichtlich. Wie in dieser Seitenansicht gezeigt, umfasst die Korpuspresse 3 zwei Ständer 33, die auf einem gemeinsamen Bett 35 ruhen. An den Ständern 33 ist jeweils eine Spindel 32 angeordnet, die über einen Spindeltrieb 36 miteinander gekoppelt sind. In Führungen 31 ist in den Spindeln 32 der obere Pressentisch 30 in der Höhe verfahrbar. Der untere Pressentisch 34 besteht aus mehreren festen Tischleisten, die voneinander beabstandet sind, so dass hierin ein aus mehreren Tischleisten bestehender Transporttisch 5 oder 6 ein- und ausfahrbar ist.

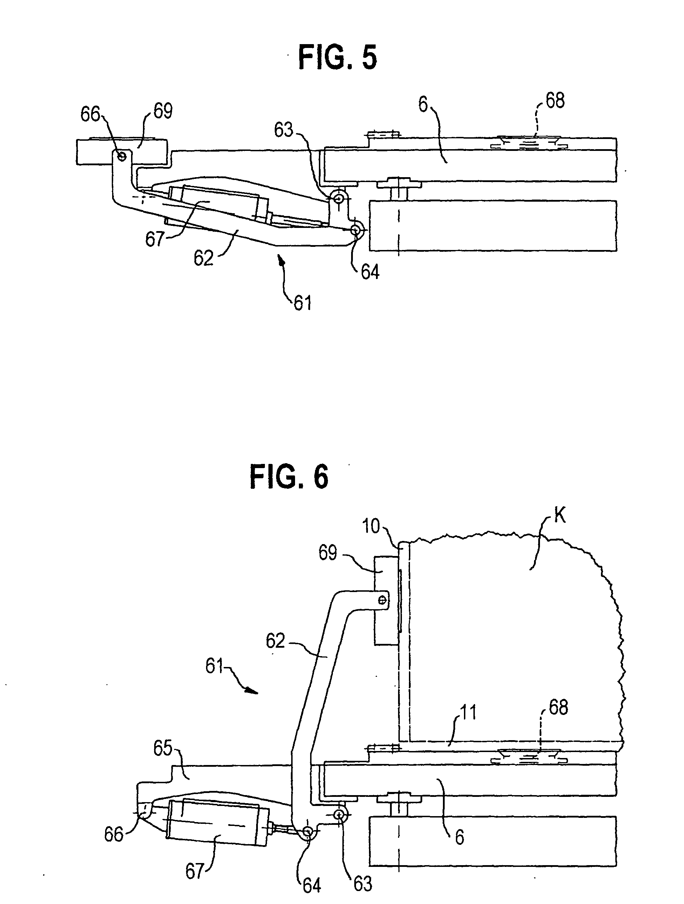

Der zweite Transporttisch 6 umfasst, wie es aus den Fig. 1 und 2 und insbesondere aus den Fig. 5 und 6 ersichtlich ist, zusätzlich zu den einzelnen Bauteilen des Transporttisches 5 einen oder mehrere Schwenkarme 61. Ein Schwenkarm 61 umfasst einen Schwenkhebel 62, der an dem Transporttisch 6 über ein Drehgelenk 63 drehbar gelagert ist. Am vorderen freien Ende des Schwenkhebels 62 sind ein oder mehrere Saugeinrichtungen 69 angeordnet, optional drehbar, so dass hiermit ein Boden 10 eines Korpus K festgehalten werden kann. Der Schwenkhebel 62 ist zudem drehbar mit einem Ende eines Stellzylinders 67 verbunden. Der Stellzylinder 67 ist mit dem anderen Ende drehbar über ein Drehgelenk 66 mit einem Ausleger 65 verbunden. Der dargestellte Schwenkhebel ist aber auch durch einen Hebel ersetzbar, der nach dem Kniehebelprinzip funktioniert.

Durch Einziehen der Zug-Druckstange des Stellzylinders 67 ist somit der Schwenkhebel 62 in eine aufrechte Position verschwenkbar, in der er dann einen fertigen Korpus K halten kann, so dass dieser mit höherer Geschwindigkeit verfahrbar ist und dabei eine optimale Abstützung für den Korpus K erbringt, der direkt nach dem Pressen noch nicht sehr steif ist. Grundsätzlich wird ein liegender Transport der Korpusse auf den Transporttischen bevorzugt, u.U. ist aber auch mit dem Schwenkarm ein stehender Transport möglich.

Wie es in den Fig. 5 und 6 ersichtlich ist, weist der Transporttisch 6 mehrere Sauger 68 auf, die zum Ansaugen einer unteren Korpusseite 11 während des Transportes von einer Station zur nächsten dienen. Der Transporttisch 6 ist dabei über einen Stellzylinder 51 in der Höhe verstellbar. Diesbezüglich gleichen sich die Transporttische 5 und 6.

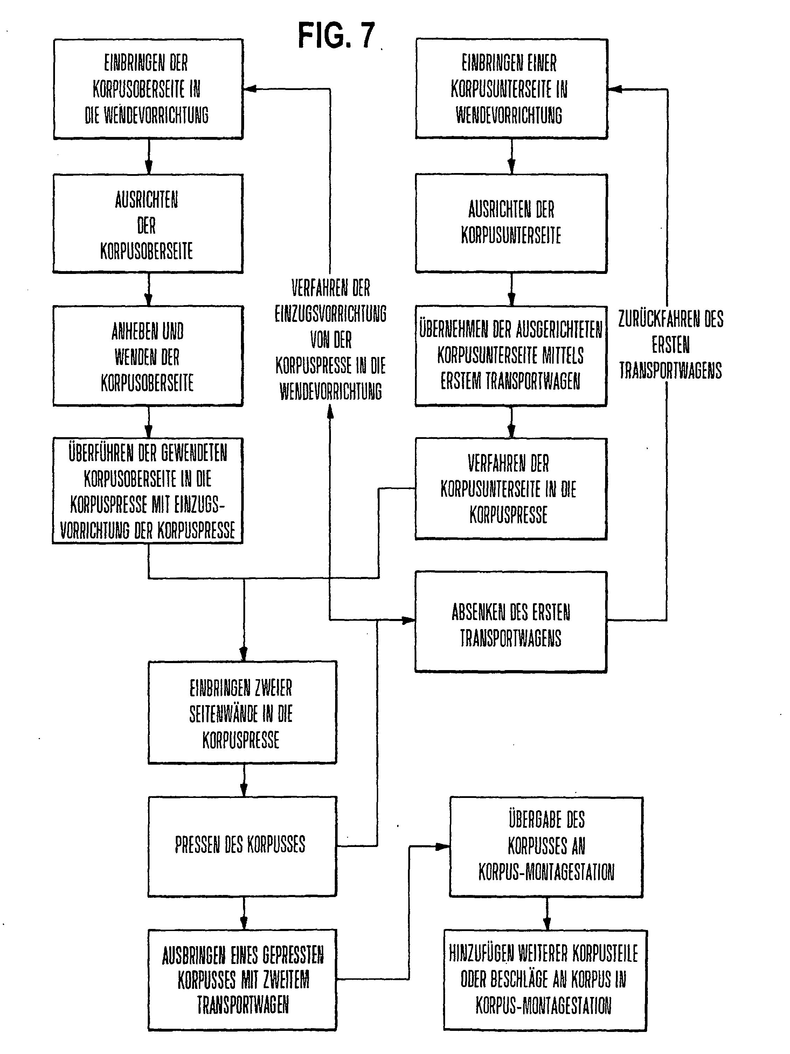

Es wird nun unter Bezugnahme auf das Ablaufdiagramm gemäß der Fig. 7 die Funktionsweise einer erfindungsgemäßen Montagelinie, wie sie in den zuvor genannten Fig. 1 - 6 schematisch dargestellt und voranstehend erläutert wurde, beschrieben. Auf einer nicht gezeigten Zuführeinrichtung werden obere und untere Korpusteile 11, 12 nacheinander zu dem Riemenförderer 1 in der Wendevorrichtung zugeführt und von diesem übernommen. Sobald ein Korpusoberteil einläuft, wird dieses von dem abgesenkten Wendeschlitten 22 ergriffen, gewendet, ausgerichtet und von dem Schlitten 8 der Korpuspresse 3 übernommen und in die Korpuspresse 3 verfahren. Hierbei halten Sauger 30a das Korpusoberteil 12 in der ausgerichteten Position bis nach dem Herunterfahren des oberen Pressentisches 30 fest. Während dieses Vorgangs wird ein von dem Riemenförderer 1 übernommenes Korpusunterteil 11 von einem eingefahrenen Transporttisch 5 übernommen, nach dessen Anheben durch darauf befindliche Ausrichtvorrichtungen 41 ausgerichtet und durch Saugnäpfe 68 ergriffen und festgehalten. Dann erfolgt das Überführen des festgehaltenen Korpusunterteils 11 in die Korpuspresse 3. Dort wird der Transporttisch gleichzeitig oder nach dem Herunterfahren des oberen Pressentisches 30 abgesenkt und in seine ursprüngliche Position verfahren. Schließlich werden die Böden 10 entweder manuell oder per Roboter in die Korpuspresse 3 eingefügt und durch Herunterfahren des oberen Pressentisches 30 für kurze Zeit zusammengedrückt. Dann wird der zweite Transporttisch 6 angehoben und durch aktivieren der Sauger der fertige Korpus festgehalten, wobei gleichzeitig der Schwenkarm 61 den Boden 10 abstützt. Daraufhin wird der zweite Transporttisch 6 zwischen die Riemenbahnen der Korpus-Montagestation 4 verfahren und wieder abgesenkt, so dass der Korpus auf diesen Riemenbahnen der Montagestation 4 stehen bleibt.

Durch mechanische Kopplung der Transporttische 5 und 6 erfolgt während des Einbringens einer Korpusseite 11 gleichzeitig auch ein Ausbringen des fertiggepressten Korpus K. Zur gleichen Zeit kann auch auf dem Riemenförderer 1 eine weitere obere Korpusseite von dem Wendeschlitten 22 aufgenommen und gewendet werden, so dass optimale Taktraten erzielbar sind.

## Patentansprüche

1. Montagelinie zum Zusammenfügen und Verpressen von einzelnen Korpusteilen (10, 11, 12) zu einem Möbelkorpus (K), wie beispielsweise ein Hoch-, Ober- oder Unterschrank, mit
- einer Zuführvorrichtung (1) zum Zuführen bestimmter Korpusteile (11, 12),
- einer Wendevorrichtung (2) zum Wenden von bestimmten von der Zuführvorrichtung (1) zugeführten Korpusteilen (12),
- einer der Wendevorrichtung (2) nachgeordneten Korpuspresse (3) zum Verpressen von Korpussen (K),
- zumindest einer der Korpuspresse (3) nachgeordneten Korpus-Montagestation (4),
- einem ersten zwischen der Wendevorrichtung (2) und der Korpuspresse (3) verfahrbaren Transporttisch (5), an dem eine Befestigungseinrichtung (68) zum lösbaren Halten von in der Wendevorrichtung (2) übernommenen und in die Korpuspresse (3) zu transportierenden Korpusteilen (11) angeordnet ist, und
- einem zweiten zwischen der Korpuspresse (3) und der nachgeordneten Korpus-Montagestation (4) verfahrbaren Transporttisch (6), an dem eine Halteeinrichtung (68) zum lösbaren Halten von in der Korpuspresse (3) übernommenen und in die nachgeordnete Korpus-Montagestation (4) zu transportierenden Korpussen (K) angeordnet ist.

2. Montagelinie nach Anspruch 1, **dadurch gekennzeichnet, dass** mehrere Korpus-Montagestationen der Korpuspresse (3) nachgeordnet sind, wovon jeweils zwei zueinander benachbarte Stationen durch einen verfahrbaren Transporttisch mit daran angeordneter Halteeinrichtung für einen von einer Station zur nächsten zu transportierenden Korpus (K) gekoppelt sind.

3. Montagelinie nach Anspruch 1, **dadurch gekennzeichnet, dass** zumindest die zwei Transporttische (5, 6), die zwischen der Wendevorrichtung (2) und der Korpuspresse (3) bzw. der Korpuspresse (3) und einer der Korpuspresse nachgeordneten Korpus-Montagestation (4) verfahrbar sind, starr miteinander gekoppelt sind.

4. Montagelinie nach Anspruch 3, **dadurch gekennzeichnet , dass** alle Transporttische starr miteinander gekoppelt sind.

5. Montagelinie nach Anspruch 1, **dadurch gekennzeichnet, dass** zumindest die zwei Transporttische (5, 6), die zwischen der Wendevorrichtung (2) und der Korpuspresse (3) bzw. der Korpuspresse (3) und einer der Korpuspresse nachgeordneten Korpus-Montagestation (4) verfahrbar sind, unabhängig voneinander verfahrbar sind.

6. Montagelinie nach Anspruch 5, **dadurch gekennzeichnet, dass** alle Transporttische unabhängig voneinander verfahrbar sind.

7. Montagelinie nach einem der vorhergehenden Ansprüche, **dadurch gekennzeichnet, dass** sich die Transporttische (5, 6) aus mehreren Tischleisten zusammensetzen, die mit Abstand zueinander nebeneinander so angeordnet sind, dass sie zusammen eine gemeinsame Auflagefläche bilden.

8. Montagelinie nach einem der vorhergehenden Ansprüche, **dadurch gekennzeichnet, dass** die Halteeinrichtung eines Tisches (5, 6) mehrere Sauger (68) umfasst.

9. Montagelinie nach Anspruch 1, **dadurch gekennzeichnet, dass** die Korpuspresse (3) einen sich aus mehreren voneinander beabstandeten Pressentischabschnitten zusammensetzenden unteren Pressentisch (34) umfasst und zwischen die Pressentischabschnitte der erste und zweite Tranporttisch (5, 6) einfahrbar ist.

10. Montagelinie nach Anspruch 9, **dadurch gekennzeichnet, dass** die verfahrbaren Transporttische (5, 6) gegenüber dem Pressentisch (34) in der Höhe verfahrbar sind.

11. Montagelinie nach Anspruch 1, **dadurch gekennzeichnet, dass** die Wendevorrichtung (2) einen in der Höhe verfahrbaren Wendeschlitten (22) umfasst,
- mit dem von der Zuführvorrichtung (1) eine obere Seite (12) eines herzustellenden Korpusses (K) aufnehmbar ist,
- der um eine horizontale Drehachse drehbar ist und
- der die gewendete obere Seite (12) an einen in die Presse (3) verfahrbaren Schlitten übergibt.

12. Montagelinie nach Anspruch 1, **dadurch gekennzeichnet, dass** die Wendevorrichtung (2) ein oder mehrere Ausrichteinrichtungen umfasst, mit der die durch die Zuführeinrichtung (1) zugeführten Korpusteile (11, 12) in gewünschter Weise ausrichtbar sind.

13. Montagelinie nach Anspruch 1, **dadurch gekennzeichnet, dass** die Zuführvorrichtung (1) ein oder mehrere Ausrichteinrichtungen umfasst, mit der die durch die Zuführeinrichtung (1) zugeführten Korpusteile (11, 12) in gewünschter Weise ausrichtbar sind.

## Claims

1. Assembly line for joining and pressing individual carcass parts (10, 11, 12) to form a furniture carcass (K), such as for example a high, top or bottom cupboard, having
- a supply device (1) for supplying certain carcass parts (11, 12),
- a turning device (2) for turning certain carcass parts (12) supplied by the supply device (1),
- a carcass press (3) arranged downstream of the turning device for pressing carcasses (K),
- at least one carcass assembly station (4) arranged downstream of the carcass press (3),
- a first transport table (5) which can be moved between the turning device (2) and the carcass press (3), on which transport table (5) an attachment device (68) is arranged for releasable holding of carcass parts (11) accepted in the turning device (2) and to be transported into the carcass press (3), and
- second transport table (6) which can be moved between the carcass press (3) and the downstream carcass assembly station (4), on which transport table (6) a holding device (68) is arranged for releasable holding of carcasses (K) accepted in the carcass press (3) and to be transported into the downstream carcass assembly station (4).

2. Assembly line according to claim 1, **characterised in that** several carcass assembly stations are arranged downstream of the carcass press (3), of which in each case two stations next to one another are coupled by a movable transport table with holding device arranged thereon for a carcass (K) to be transported from one station to the next.

3. Assembly line according to claim 1, **characterised in that** at least the two transport tables (5, 6), which can be moved between the turning device (2) and the carcass press (3) or the carcass press (3) and a carcass assembly station (4) downstream of the carcass press, are coupled rigidly to one another.

4. Assembly line according to claim 3, **characterised in that** all transport tables are coupled rigidly to one another.

5. Assembly line according to claim 1, **characterised in that** at least the two transport tables (5, 6), which can be moved between the turning device (2) and the carcass press (3) or the carcass press (3) and a carcass assembly station (4) downstream of the carcass press, can be moved independently of one another.

6. Assembly line according to claim 5, **characterised in that** all transport tables can be moved independently of one another.

7. Assembly line according to one of the preceding claims, **characterised in that** the transport tables (5, 6) are composed of several table strips, which are arranged next to one another at a distance from one another so that they together form a common bearing surface.

8. Assembly line according to one of the preceding claims, **characterised in that** the holding device of a table (5, 6) comprises several suction devices (68).

9. Assembly line according to claim 1, **characterised in that** the carcass press (3) comprises a lower press table (34) being composed of several press table sections spaced from one another and can be moved between the press table sections of the first and second transport table (5, 6).

10. Assembly line according to claim 9, **characterised in that** the movable transport tables (5, 6) can be moved in the air with respect to the press table (34).

11. Assembly line according to claim 1, **characterised in that** the turning device (2) comprises a turning carriage (22) which can be moved in the air,
- with which an upper side (12) of a carcass (K) to be produced can be received by the supply device (1),
- which can be rotated around a horizontal axis of rotation and
- which transfers the fumed upper side (12) to a carriage which can be moved into the press (3).

12. Assembly line according to claim 1, **characterised in that** the turning device (2) comprises one or more alignment devices, with which the carcass parts (11, 12) supplied by the supply device (1) can be aligned in required manner.

13. Assembly line according to claim 1, **characterised in that** the supply device ( 1 ) comprises one or more alignment devices, with which the carcass parts (11, 12) supplied by the supply device (1) can be aligned in required manner.

## Revendications

1. Ligne de montage pour l'assemblage et le compactage à la presse de différentes parties (10, 11, 12) d'un corps de meuble (K), comme par exemple un dessus de meuble, une partie supérieure ou inférieure d'une armoire, comportant
- un dispositif d'amenée (1 ) pour l'amenée de parties de corps de meuble déterminées (11,12),
- un dispositif de rotation (2) pour la rotation de parties de corps de meuble (12) déterminées, amenées par le dispositif d'amenée (1),
- une presse de corps (3) en aval du dispositif de rotation (2) pour le compactage des corps de meuble (K),
- au moins un poste de montage des corps (4) en aval de la presse de corps (3),
- une première table de manutention (5) déplaçable entre le dispositif de rotation (2) et la presse de corps (3), sur laquelle est agencé un système de fixation (68) pour le maintien amovible de parties de corps (11) prises en charge par le dispositif de rotation (2) et qui doivent être acheminées dans la presse de corps (3), et
- une deuxième table de manutention (6) déplaçable entre la presse de corps (3) et le poste de montage de corps (4) en aval de cette dernière et sur laquelle est agencé un système de maintien (68) pour le maintien amovible des corps de meuble (K) pris en charge dans la presse de corps (3) et qui doivent être acheminées dans le poste de montage de corps (4) en aval de cette dernière.

2. Ligne de montage selon la revendication 1, **caractérisée en ce que** plusieurs postes de montage de corps sont disposés en aval de la presse de corps (3), dont respectivement deux postes voisins l'un de l'autre sont reliés par une table de manutention déplaçable avec un système de maintien agencé sur celle-ci pour un corps de meuble (K) qui doit être acheminé d'un poste de montage au suivant.

3. Ligne de montage selon la revendication 1, **caractérisée en ce qu'**au moins les deux tables de manutention (5,6), qui sont déplaçables entre le dispositif de rotation (2) et la presse de corps (3) ou respectivement la presse de corps (3) et l'un des postes de montage de corps (4) disposés en aval de la presse de corps, sont reliées de façon rigide entre elles.

4. Ligne de montage selon la revendication 3, **caractérisée en ce que** toutes les tables de manutention sont reliées de façon rigide entre elles.

5. Ligne de montage selon la revendication 1, **caractérisée en ce qu'**au moins les deux tables de manutention (5,6) qui sont déplaçables entre le dispositif de rotation (2) et la presse de corps (3) ou la presse de corps (3) et l'un des postes de montage de corps (4) disposés en aval de la presse de corps, sont déplaçables indépendamment l'une de l'autre.

6. Ligne de montage selon la revendication 5, **caractérisée en ce que** toutes les tables de manutention sont déplaçables indépendamment l'une de l'autre.

7. Ligne de montage selon l'une des revendications précédentes, **caractérisée en ce que** les tables de manutention (5,6) sont constituées de plusieurs listeaux de table, qui sont disposés côte-à-côte avec un certain espacement entre eux de façon à former conjointement une surface d'appui commune.

8. Ligne de montage selon l'une des revendications précédentes, **caractérisée en ce que** le système de maintien d'une table (5,6) comprend plusieurs ventouses (68).

9. Ligne de montage selon la revendication 1, **caractérisée en ce que** la presse de corps (3) comprend une table de presse inférieure (34) constituée de plusieurs tronçons de table de presse séparés entre eux, et la première et la deuxième tables de manutention (5,6) peuvent être introduites entre les tronçons de la table de presse.

10. Ligne de montage selon la revendication 9, **caractérisée en ce que** les tables de manutention déplaçables (5,6) sont mobiles en hauteur en regard de la table de presse (34).

11. Ligne de montage selon la revendication 1, **caractérisée en ce que** le dispositif de rotation (2) comprend un chariot de rotation (22) déplaçable en hauteur,
- avec lequel un côté supérieur (12) d'un corps (K) à fabriquer peut être pris en charge par le dispositif d'amenée (1),
- qui peut tourner autour d'un axe de rotation horizontal, et
- qui transfère le côté supérieur tourné (12) à un chariot déplaçable dans la presse (3).

12. Ligne de montage selon la revendication 1, **caractérisée en ce que** le dispositif de rotation (2) comprend un ou plusieurs systèmes d'alignement permettant d'aligner de la manière souhaitée les parties de corps (11,12) acheminées par le système d'amenée (1).

13. Ligne de montage selon la revendication 1, **caractérisée en ce que** le dispositif d'amenée (1) comprend un ou plusieurs systèmes d'alignement au moyen duquel ou desquels les parties de corps (11,12) acheminées par le dispositif d'amenée (1 ) sont alignées de la manière souhaitée.
